# EUROPÄISCHE PATENTSCHRIFT

(11) **EP 3 006 303 B1**
(45) Veröffentlichungstag und Bekanntmachung des Hinweises auf die Patenterteilung: **17.08.2022**
(21) Anmeldenummer: 15188558.9
(22) Anmeldetag: 06.10.2015
(51) Int. Cl.: B62B 3/00, B62B 3/02

(54) **FAHRBARER WARENTRANSPORT- UND PRÄSENTATIONSSTÄNDER**
MOBILE GOODS TRANSPORT AND PRESENTATION STAND
SUPPORT MOBILE DE PRESENTATION ET DE TRANSPORT DE MARCHANDISES

(30) Priorität: 06.10.2014 DE 102014114463
(43) Veröffentlichungstag der Anmeldung: 13.04.2016
(73) Patentinhaber: Landgard Service GmbH, 47638 Straelen-Herongen (DE)
(72) Erfinder: Bross, Kai, 47877 Willich (DE)
(74) Vertreter: Brinkmann & Partner

(56) Entgegenhaltungen:
- EP-A1- 0 487 147
- EP-A1- 2 085 288
- WO-A1-86/00204
- WO-A1-96/32914
- WO-A1-97/00033
- NL-C1- 1 031 702
- US-A- 904 175
- US-A- 3 137 250
- US-A- 4 512 591

## Beschreibung

Die vorliegende Erfindung betrifft einen fahrbaren Warentransport- und Präsentationsständer umfassend ein Basiselement, vier Pfostenelemente und Regalbodenelemente, wobei alle Elemente lösbar zusammensteckbar sind.

Derartige Warentransport- und Präsentationsständer sind im Stand der Technik bekannt. Die NL 10 31 702 C1 offenbart eine Hebevorrichtung zur Aufnahme von Bauteilen eines dänischen Trolleys, bestehend aus einem Rahmen, die unterseitig Rollen aufweisen, wobei die Rollen paarweise schwenkbar und feststehend sind. Zur Aufnahme der Platten der dänischen Trolleys sind in den Pfosten Ausnehmungen vorgesehen, in die die Platten mit ihren Haken endseitig eingehängt werden können. Die Pfosten wiederum können in die Eckelemente des Rahmens gesteckt werden. Solche Ständer oder Wagenelemente werden beispielsweise zum Transport und die Präsentation von Pflanzen und Blumen eingesetzt. Bei derartigen Vorgängen sind eine große Vielzahl von Randbedingungen zu erfüllen. Es ist daher wichtig, zu verstehen, in welchem Umfeld derartige Vorrichtungen eingesetzt werden.

Am Beispiel von Pflanzen und Blumen sei erläutert, dass diese in sehr weitreichenden Aktionen vertrieben werden. Zunächst werden die Pflanzen organisiert, was dadurch geschieht, dass entsprechende Aufträge an zulieferende Gärtnereien erteilt werden. Diese beginnen dann mit der Aufzucht. Zu einem vorgegebenen Zeitpunkt wird in ein Logistikzentrum eine äußerst große Zahl gleichartiger oder unterschiedlicher Pflanzen angeliefert. Zu diesem Zweck müssen Transport- und Präsentationsvorrichtungen der mit der vorliegenden Erfindung betroffenen Art bereitgehalten werden, welche diese Pflanzen aufnehmen. Die bestückten Transportständer werden dann in LKWs eingestapelt und von diesen in die Vertriebsstätten verteilt. Dort dienen die Ständer als Präsentationsständer, aus denen der Endverbraucher sich die Produkte entnimmt. Am Ende werden die Ständer zusammengelegt und die einzelnen Teile wieder über die gleiche Logistikkette zurück transportiert.

Das Zusammenstecken und Zerlegen muss denkbar einfach sein. Es muss praktisch von jedermann durchgeführt werden können. Der Rücktransport ist dann besonders vorteilhaft, wenn die zusammengehörigen Teile auch zusammen bleiben, so dass die Zusammenstellung neuer logistischer Einheiten vereinfacht ist.

Bei den zurzeit im Stand der Technik eingesetzten Systemen gibt es eine Reihe von Nachteilen. Ein erster simpler Nachteil besteht darin, dass unterschiedliche Systeme unterschiedliche Maße haben, die wiederum an die logistischen Transportmaße von Standardtrucks nur schwer anpassbar sind. Beim Zusammenstecken muss auf eine bestimmte Orientierung von Teilen geachtet werden, da beispielsweise Pfosten bekannt sind, die winkelartig ausgeführt sind. Eins der Winkelelemente hat ein durchgängiges Langloch, das andere Einzellöcher, Die Einzellöcher dienen der Befestigung von Regalböden in vorgegebenen Abständen. Die Langlöcher dienen dem Zweck, dass Regalböden mit Befestigungselementen einsetzbar sind, dabei aber auf die Basis fallen. Dies dient der Sammlung und dem Rücktransport von Regalbrettern. Sämtliche vorbekannte Systeme sind aus Metall, was den Nachteil hat, dass sie zum einen vergleichsweise teuer sind, zum anderen aber nach Beschädigung im Wesentlichen deformiert bleiben. Aufgrund der hohen Preise ist ein simpler Austausch unwirtschaftlich.

Ein weiterer Nachteil besteht darin, dass üblicherweise auf das Basiselement in den Eckbereichen Pfosten aufgestellt werden. Dann werden die Brettelemente in die Pfosten eingehängt. Dabei stehen aus dem Pfosten Einhänghaken heraus, die damit auch in der Projektion über die durch die Basis definierte Grundfläche hinausstehen. Dies ist besonders nachteilig, wenn solche Systeme im Transportwagen eingestapelt werden. Sie stoßen dann nicht bündig aneinander, es entstehen Lücken, das Wagenvolumen wird nicht vollständig genutzt und dergleichen.

Ausgehend vom vorbeschriebenen Stand der Technik liegt der Erfindung die **Aufgabe** zugrunde, einen verbesserten fahrbaren Transport- und Präsentationsständer bereitzustellen.

Zur technischen **Lösung** wird ein fahrbarer Warentransport- und Präsentationsständer mit den Merkmalen des Patentanspruches 1 vorgeschlagen. Weitere Vorteile und Merkmale ergeben sich aus den Unteransprüchen.

Generisch wird mit der Erfindung ein System zur Erstellung eines fahrbaren Transport- und Präsentationsständers sowie ein aus Systemelementen zusammengestellter Ständer vorgeschlagen.

Der Ständer umfasst ein Basiselement, vier Pfostenelemente und je nach Bedarf eine gewisse Anzahl von Regalbodenelementen. Alle Elemente sind lösbar miteinander zusammensteckbar.

Das Basiselement definiert in Länge und Breite die Grundfläche eines virtuellen darauf stehenden Quaders. Sind die Pfosten in das Basiselement eingesteckt und die Regalbodenelemente in die Pfostenelemente eingehängt, wird bei dem erfindungsgemäßen System sichergestellt, dass kein Teil eines der Pfostenelemente oder eines der Regalbodenelemente aus dem durch den Quader definierten Volumen heraussteht. Auf diese Weise können definierte Transportvolumen garantiert werden.

Gemäß der Erfindung hat das Basiselement beispielsweise eine Fläche von 0,48 m², wobei die Länge vorzugsweise bei 80 cm und die Breite vorzugsweise bei 60 cm liegt. Dies erlaubt, die Standfläche eines Standardtrucks in optimaler Weise mit entsprechenden Ständern zu bestellen, also eine optimale Menge an Ständern zu transportieren. Andererseits ist die Dimensionierung so vorgesehen, dass auch in engen Bereichen manövriert werden kann.

An jeder Ecke des Basiselementes ist ein Pfostenelement eingesteckt, welches senkrecht von der Oberfläche des Basiselementes nach oben steht. Alle Pfostenelemente sind gleich im Hinblick auf Länge und Dicke. Die Pfostenelemente sind als leiterförmige Stangenelemente ausgebildet, die aneinandergereihte Einzelöffnungen zum Einhängen von Regalbodenelementen aufweisen. Die Regalbodenelemente sind derart ausgebildet, dass sie im Wesentlichen die gleiche Grundfläche wie das Basiselement haben. Allerdings haben sie Ausnehmungen in dem Bereich, in welchem die Pfostenelemente stehen. In diesen Ausnehmungen sind Hakenelemente vorgesehen, so dass das Regalbodenelement mit dem Hakenelement in die Löcher eines Pfostenelementes einsetzbar ist. Sind alle vier Hakenelemente in jeweils einem Pfostenelement eingehakt, sitzt der Regalboden fest und sicher. Das Pfostenelement ist dabei so ausgebildet, dass der mit Öffnungen versehene Bereich gegenüber einer Einsteckkante zurückversetzt ist. In diesen freien Bereich kommt das Hakenelement eines Regalbodenelementes, so dass sich eine definierte bündige Geometrie ergibt, die nicht über die durch das Basiselement definierte Grundfläche hinaussteht.

Mit der Erfindung wird ein System zum Aufbau eines Warentransport- und Präsentationsständers bereitgestellt. Darüber hinaus wird ein neuartiger Transport- und Präsentationsständer vorgeschlagen.

Jedes der drei Einzelelemente, Basiselement, Pfosten und Regalbodenelement ist dabei so ausgebildet, dass diese als System aufeinander abgestimmt sind.

Andererseits weist jedoch jedes Einzelelement für sich genommen Neuerungen auf, die auch für herkömmliche Transportsysteme und Transportständer der gleichen Art von Vorteil sind. Jedes der Einzelelemente für sich ist innovativ und schutzfähig und im Folgenden wird jedes der Einzelelemente separat detailliert beschrieben.

Das Basiselement besteht aus einem plattenförmigen Element, an dessen Unterseite in einer vorgegebenen Position Räder positioniert sind. Das Plattenelement hat eine Längskante von 80 cm Länge sowie eine Querkante von 60 cm Länge. Vier Räder sind so an der Unterseite des Plattenelementes positioniert, dass diese zwischen sich, von der Längsseite aus betrachtet, einen Abstand von 60 cm aufweisen. Dieses ermöglicht das Einfahren der Gabel eines Gabelstaplers. An einer Querseite sind zwei Räder angeordnet, die starr sind und parallel zur Längsseite ausgerichtet sind. An der gegenüberliegenden Kante sind zwei Räder angeordnet, die drehbar sind. Die drehbaren Räder haben einen kleineren Durchmesser, in etwa 80% des Durchmessers der größeren Räder, so dass der 60 cm Abstand zwischen starren und einem drehbaren Rad gewährleistet sein kann.

Das Basiselement hat eine ebene Oberfläche, die von einem hochstehenden Rand umgeben ist. An den beiden Schmalseiten ist der Rand unterbrochen, so dass sich Nocken ergeben. Auf die ebene Oberfläche gestellt, hat das Basiselement eine Kastenform, die erkennbar würde, würde man das Basiselement von unten betrachten. In dieser Kastenform sind Senken zur Anordnung der Räder ausgebildet. Weiterhin sind Grifflöcher ausgebildet. Diese können ausgeformt sein, so dass sich beispielsweise in einer Richtung eine verringerte Eingrifftiefe ergibt. Gemäß einem vorteilhaften Vorschlag der Erfindung ist das Basiselement durch Spritzguss erzeugt. Hier wird vorteilhafterweise PP verwendet. An den vier Ecken sind nach unten stehend vier Eckpfosten ausgebildet. Diese Eckpfosten haben verschiedene Funktionen. Zum einen wird beim Stapeln von Basiselementen jeweils ein Eckpfosten in den anderen gestapelt und stützt sich auf diesen auf. Ist ein Rad defekt, so kann der Ständer noch auf dem Eckpfosten stehen. Er bleibt dabei im Wesentlichen horizontal, was eine erhebliche Verbesserung gegenüber dem Stand der Technik ist. An der Oberfläche sind Stapelnocken angeordnet, auf die gleichartige Elemente aufsetzbar sind, die im Bereich der Nocken eine entsprechende Senke haben. Dies ist beispielsweise bei den Regalbodenelementen der Fall.

Lediglich als Eckelement wird ein Metallprofil in Profilnuten eingeschoben und mittels einer Schraube befestigt. Die Schraube ist dabei gesenkt, so dass sie nicht über das Grundmaß hinaussteht. Dadurch wird ein Eckelement definiert, das an der einen Seite aus Kunststoff besteht und eine metallische Außenhülle hat. In dieses freie Volumen lässt sich dann ein Pfostenelement einstecken, welches sich dann auf die durchgängige Schraube abstützt. In sämtlichen Senken sind Löcher für Dränage vorgesehen, so dass sich kein Wasserstand ergibt. Das Eckelement ist so ausgebildet, dass ein Pfostenelement auch von unten einsteckbar ist, bis es an die Befestigungsschraube für das Metallprofil stößt. Auf diese Weise lassen sich gleichartige Container beziehungsweise Ständer stapeln.

Statt nur das Eckelement selbst als Metallprofil auszubilden, wird gemäß einem alternativen vorteilhaften Vorschlag der Erfindung ein Stahlrahmen oder seitliche Stahlschienen verwendet, die die Eckelemente aufweisen. Auf diese Weise kann eine erhöhte Stabilität und Robustheit erzielt werden.

Mit der Erfindung wird ein neuartiges Basiselement beschrieben, welches gegenüber dem Stand der Technik erhebliche Vorteile aufweist. Allerdings sind auch die einzelnen Verbesserungen des Basiselementes für sich schutzfähig und erfinderisch.

Das System umfasst ein Pfostenelement, welches für sich genommen ebenfalls ein eigenständig schutzfähiges Element ist. Ein Pfostenelement besteht im Wesentlichen aus einem Leiterprofil. Dieses ist gemäß einem Vorschlag der Erfindung in einer Produktlinie durch Walzformen aus einem Metallstreifen gefaltet. Das Pfostenelement hat zwei seitliche Pfostenteile, die einen fünfeckigen hohlen Innenraum definieren, sowie ein flaches mittleres, mit Löchern versehenes Leiterteil. Die hohlen Eckbereiche werden durch Pfropfen verschlossen. Während er die gesamte Länge des Pfostenelementes gleichartige und zu einer Quermittellinie symmetrisch angeordnete Löcher ausgebildet sind, die dem Einhängen von Regalbodenelementen dienen, ist in einem vorgegebenen Abstand zur Endkante jeweils ein Loch anderer Form ausgebildet. Dieses Loch ist gebildet durch Ausstanzen und Auffalten des ausgestanzten Materials, so dass sich nach oben stehende Materialstücke ergeben. Stapelt man entsprechende Pfostenelemente flach aufeinander, so dienen diese aufgefalteten Bereiche dem Zweck, ein Querverrutschen von Pfostenelementen zu vermeiden.

Entlang der Löcher zum Einhängen sind Marker ausgebildet, um eine gewisse Höhenposition zu markieren. Dadurch wird es einfach, Regalbodenelemente einzuhängen, da man nur eine geringe Anzahl von Markern abzählen muss, nicht eine große Anzahl von Löchern. Das erfindungsgemäße Pfostenelement ist außen stabil und steif, weil es eine Art Holm ausbildet, während es im mittleren Bereich dünn ist und somit zum Einhängen eines Brettes geeignet ist. Es wird durch die Form stapelbar. Es weist keinerlei scharfe Kante auf und kann in einer einfachen Produktlinie durch Walzformen gefertigt werden.

Weiterhin wird mit der Erfindung ein Regalbodenelement bereitgestellt. Dieses besteht aus einem plattenförmigen Element, welches ebenfalls aus PP im Spritzgussverfahren herstellbar ist. Es weist Grifflöcher zum Eingriff auf. Diese können einseitig abgeflacht sein um ein leichteres Eingreifen und Heben zu ermöglichen. Es weist aufgebogene Nocken auf, die im unteren Bereich eine Senke bilden. Dadurch werden Regalbodenelemente der gleichen Art stapelbar.

Die Eckbereiche sind als Ausnehmungen ausgebildet. In diese wird ein Metallhakenelement in Löcher eingetrieben. Das Metallhakenelement hat seitliche Widerhakenelemente und kann somit nicht entfernt werden. Ein in der Ausnehmung ausgebildetes Anschlagelement stellt sicher, dass das Brett immer relativ zu einem Pfostenelement in der richtigen Position hängt. Das Regalbodenelement beziehungsweise Brett hat eine ebene Oberfläche und einen umlaufenden Rand. An der umlaufenden Unterkante ist es abgekantet. Auf diese Weise kann beim Stapeln der Rand eines unteren Regalbodenelementes in den abgekanteten Bereich eines darüber liegenden Regalbodenelementes verschwinden. Der Rand hat beispielsweise eine Höhe von 20 mm und definiert damit eine Stapelhöhe.

Gemäß einem alternativen vorteilhaften Vorschlag der Erfindung werden in den Regalbodenelementen keine Löcher zum Eintreiben von Metallhakenelementen ausgebildet, sondern die Metallhakenelemente werden als Zwischenprofil direkt beim Spritzvorgang zur Herstellung des Regalbodenelements in das Material eingespritzt.

Durch die erfindungsgemäße Anordnung ergibt sich ein vordefinierter Abstand zwischen den Pfostenelementen, in welcher ein Standardträgerelement für Pflanzen einsetzbar ist. Auf diese Weise wird das erfindungsgemäße System in herkömmlichen Systemen ohne weiteres einsetzbar.

Weitere Vorteile und Merkmale der Erfindung ergeben sich aus der folgenden Beschreibung anhand der Figuren. Dabei zeigen:
- Fig. 1: eine perspektivische Darstellung eines Ausführungsbeispiels für einen erfindungsgemäßen Träger;
- Fig. 2: eine perspektivische Darstellung gemäß Fig. 1 aus einer anderen Perspektive;
- Fig. 3: eine Darstellung gemäß Fig. 1 von einer Schmalseite;
- Fig. 4: eine Darstellung des Ständers gemäß Fig. 1 von einer Breitseite betrachtet;
- Fig. 5: eine Darstellung des Ständers gemäß Fig. 1 von oben;
- Fig. 6: eine Darstellung des Ständers gemäß Fig. 1 von unten;
- Fig. 7: eine vergrößerte perspektivische Detaildarstellung des unteren Bereichs des Ständers gemäß Fig. 1;
- Fig. 8: eine vergrößerte Seitenansicht des unteren Bereichs des Ständers gemäß Fig.1 ;
- Fig. 9: eine perspektivische Ansicht eines erfindungsgemäßen Basiselementes;
- Fig. 10: eine Seitenansicht des Basiselementes gemäß Fig. 9;
- Fig. 11: eine Frontansicht des Basiselementes gemäß Fig. 9;
- Fig. 12: eine Draufsicht auf das Basiselement gemäß Fig. 9;
- Fig. 13: eine Unteransicht des Basiselementes gemäß Fig. 9;
- Fig. 14: eine Detailansicht eines Eckbereiches des Basiselementes gemäß Fig. 9;
- Fig. 15: eine Detailansicht eines Eckbereiches von oben;
- Fig. 16: eine Detailansicht eines Eckbereiches von der Seite;
- Fig. 17: eine Detailansicht eines Eckbereiches von vorne;
- Fig. 18: eine perspektivische Darstellung eines erfindungsgemäßen Pfostenelementes;
- Fig. 19: eine Frontansicht eines Pfostenelementes gemäß Fig. 18;
- Fig. 20: eine Seitenansicht eines Pfostenelementes gemäß Fig. 18;
- Fig. 21: eine Draufsicht auf das Pfostenprofil gemäß Fig. 18;
- Fig. 22: eine perspektivische Ansicht eines Regalbodenelementes;
- Fig. 23: eine Draufsicht auf das Regalbodenelement gemäß Fig. 22;
- Fig. 24: eine Frontansicht des Regalbodens gemäß Fig. 22;
- Fig. 25: eine Seitenansicht des Regalbodens gemäß Fig. 22;
- Fig. 26: eine Unteransicht des Regalbodenelementes gemäß Fig. 22;
- Fig. 27: eine Draufsicht auf einen bestimmungsgemäß montierten Träger;
- Fig. 28: eine Detailansicht eines Einhängebereiches eines Regalbodenelementes in einen Pfosten;
- Fig. 29: die Detailansicht gemäß Fig. 28 von oben;
- Fig. 30: eine perspektivische Ansicht eines erfindungsgemäßen Ständers für den Nutzungsfall der Rückführung von Pfostenelementen;
- Fig. 31: eine Detailansicht eines Stapels von Pfostenelementen;
- Fig. 32: eine Seitenansicht des Ständers gemäß Fig. 30;
- Fig. 33: eine perspektivische Ansicht von für Lagerung und/oder Rückführung gestapelten Basiselementen;
- Fig. 34: eine perspektivische Ansicht von für Lagerung oder Rückführung gestapelten Regalbodenelementen;
- Fig. 35: eine Frontansicht gemäß Fig. 34;
- Fig. 36: eine perspektivische Ansicht für eine alternative Ausführungsform eines Basiselementes;
- Fig. 37: eine perspektivische Darstellung zweier gestapelter Basiselemente gemäß Fig. 36 und
- Fig. 38: eine Darstellung eines Basiselementes gemäß Fig. 36 von unten.

In den Figuren sind gleiche Elemente mit gleichen Bezugszeichen versehen. Soweit für ein Metallkappenprofil das Bezugszeichen 9 verwendet wurde, entspricht dies dem Profil, für welches auch das Bezugszeichen 17 verwendet wurde.

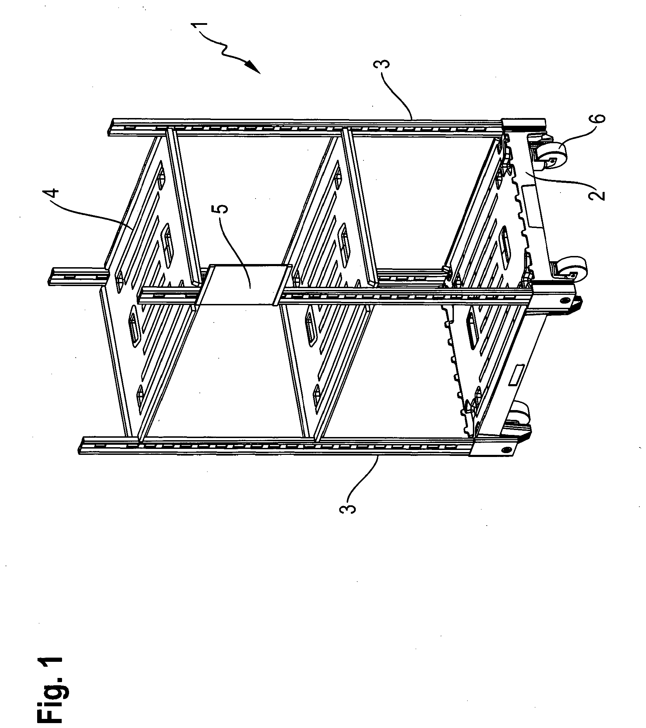

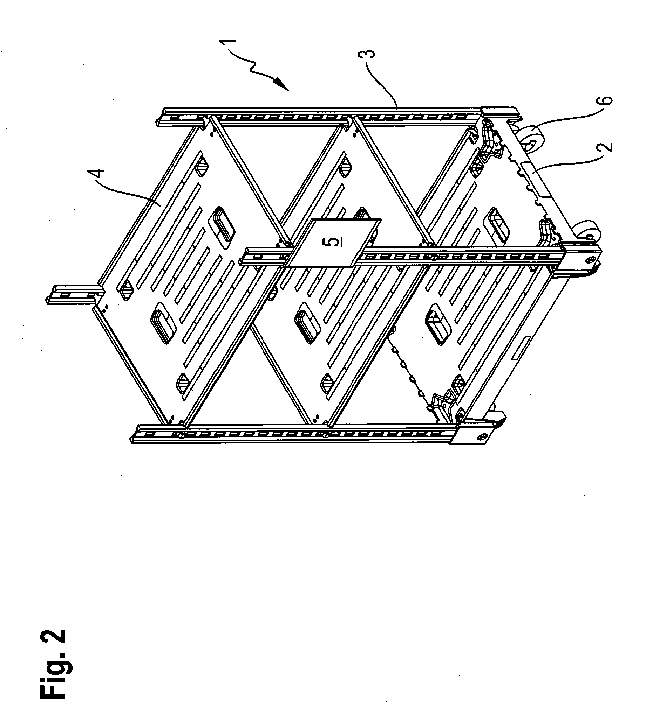

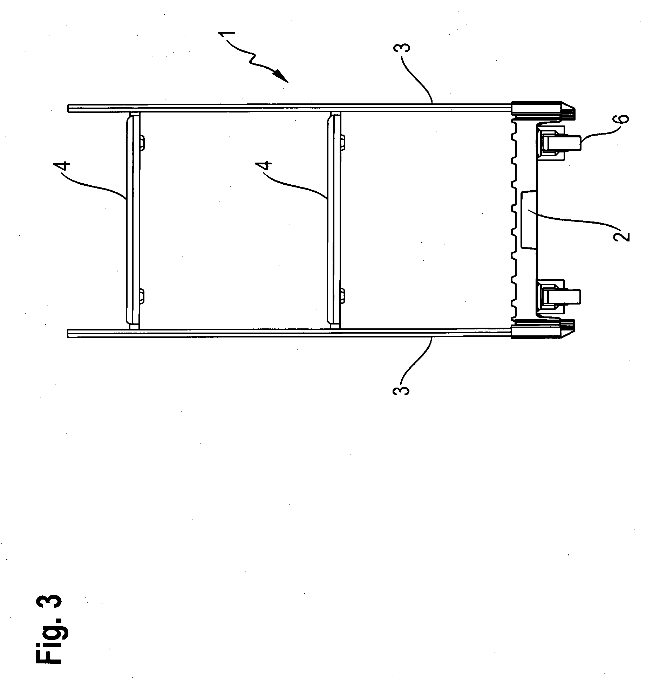

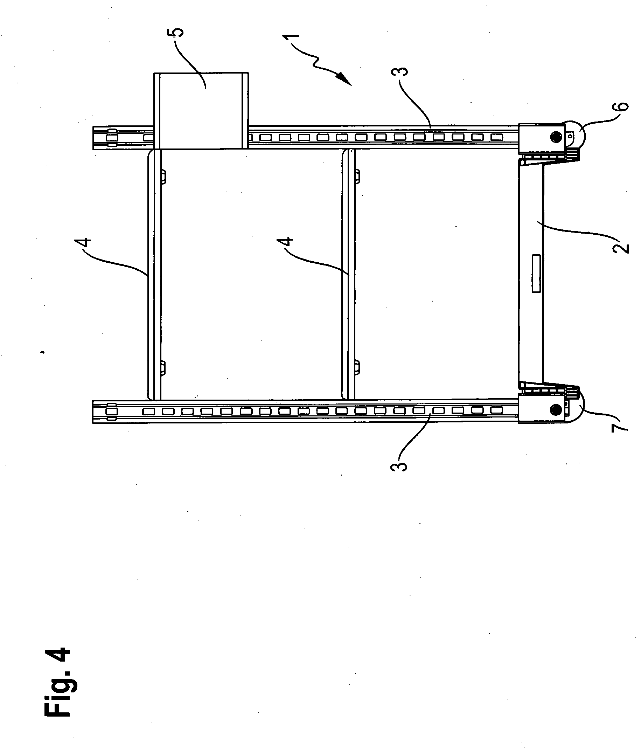

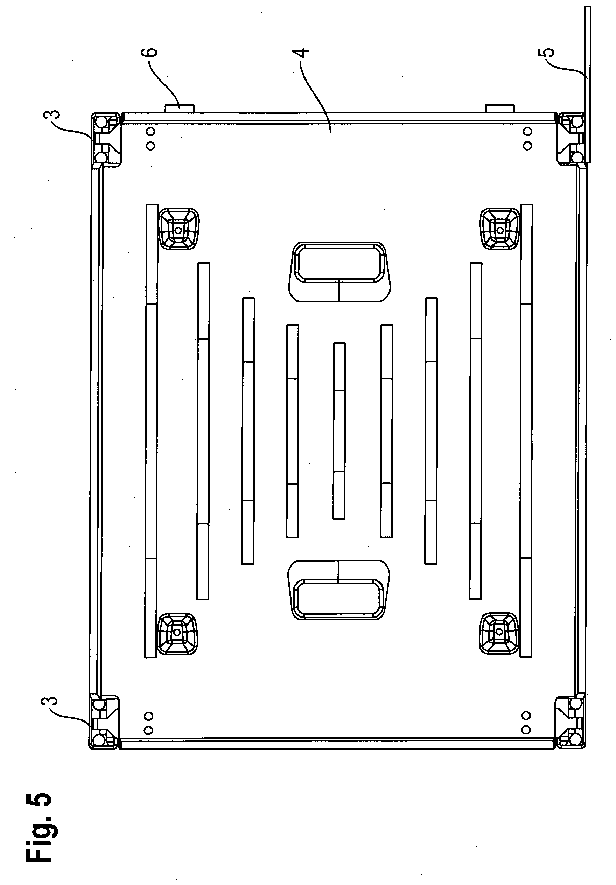

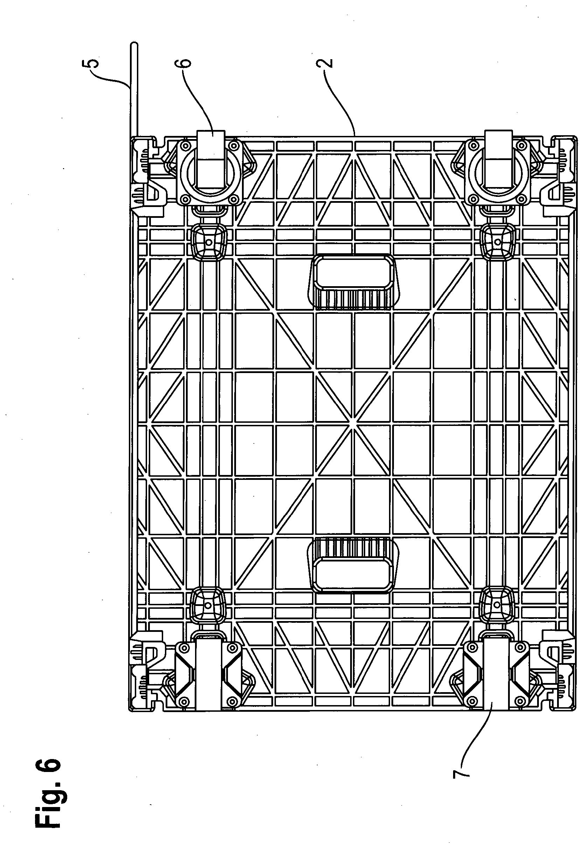

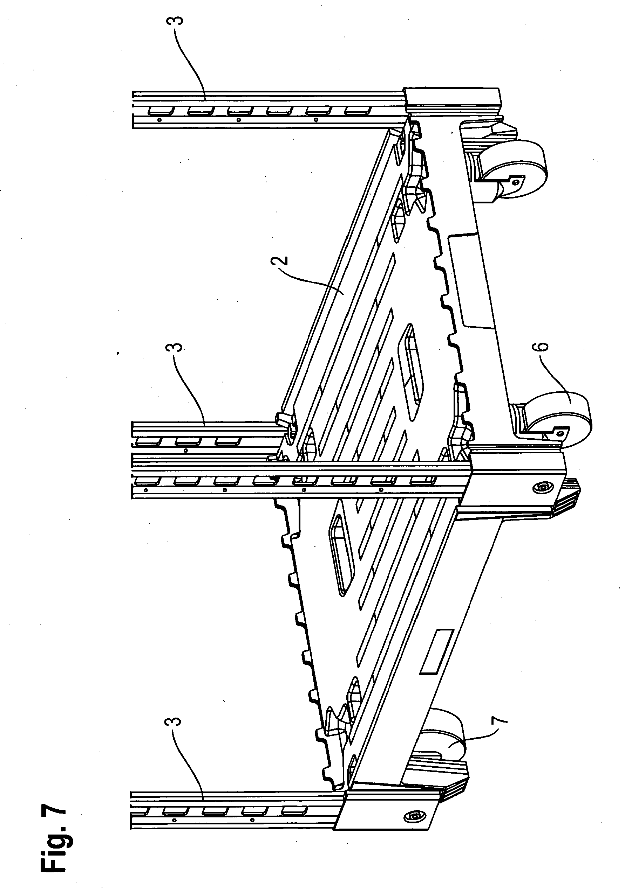

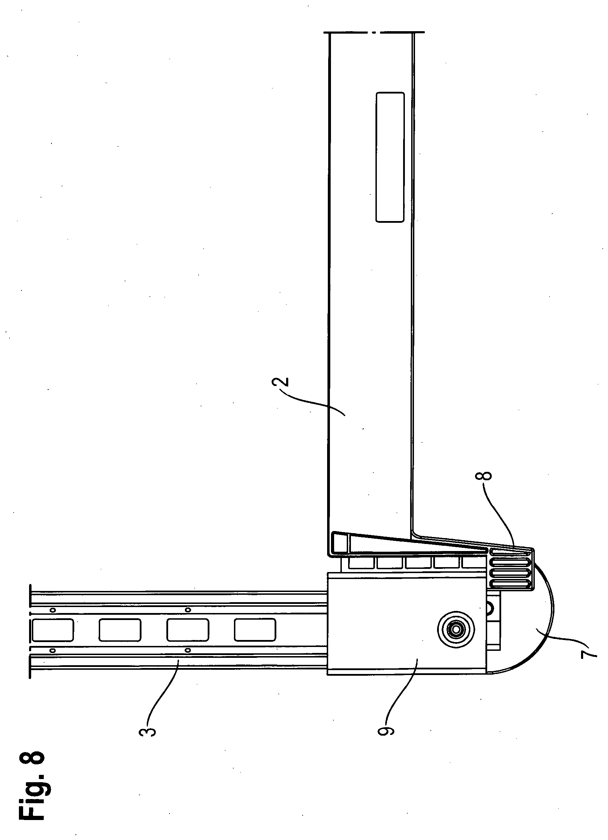

Gemäß den Figuren 1 bis 8 sind Details eines Ausführungsbeispiels eines erfindungsgemäßen Transport- und Präsentationsständers 1 gezeigt. Diese umfassen ein Basiselement 2, vier Pfostenelemente 3, im gezeigten Ausführungsbeispiel zwei Einlagebodenelemente 4. Im unteren Bereich sind drehbare Räder 6 und feststehende Räder 7 gezeigt. Eine Anzeigetafel 5 ist beispielhaft als Zusatzelement gezeigt Das Basiselement verfügt gemäß Detaildarstellung in Fig. 8 über ein Ständerelement 8. Darüber hinaus ist ein Metallprofil zur Ausbildung eines metallischen Eckelementes 9 gezeigt.

Die Funktionalität der einzelnen Elemente wird später in Bezug auf andere Figuren erörtert.

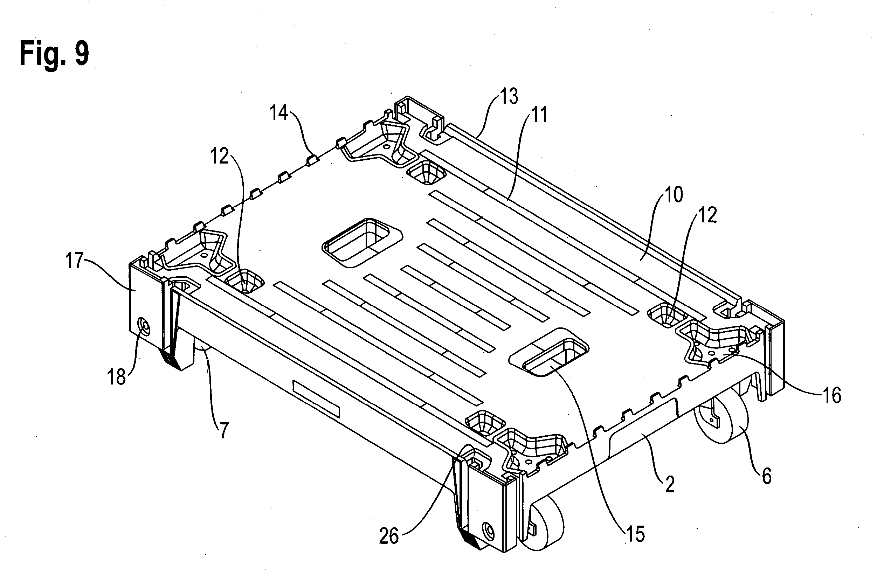

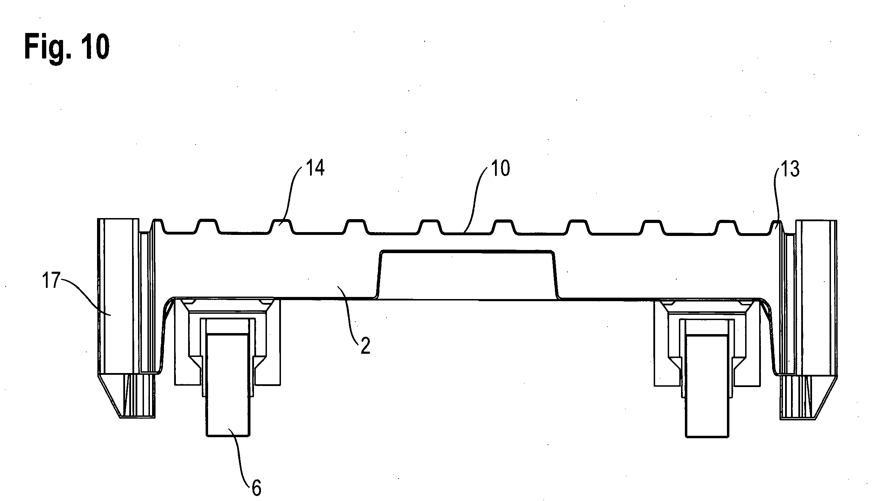

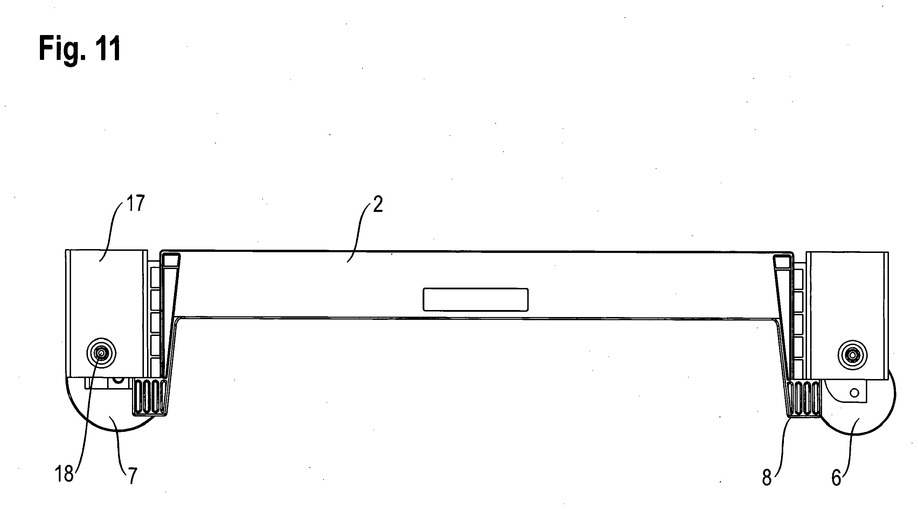

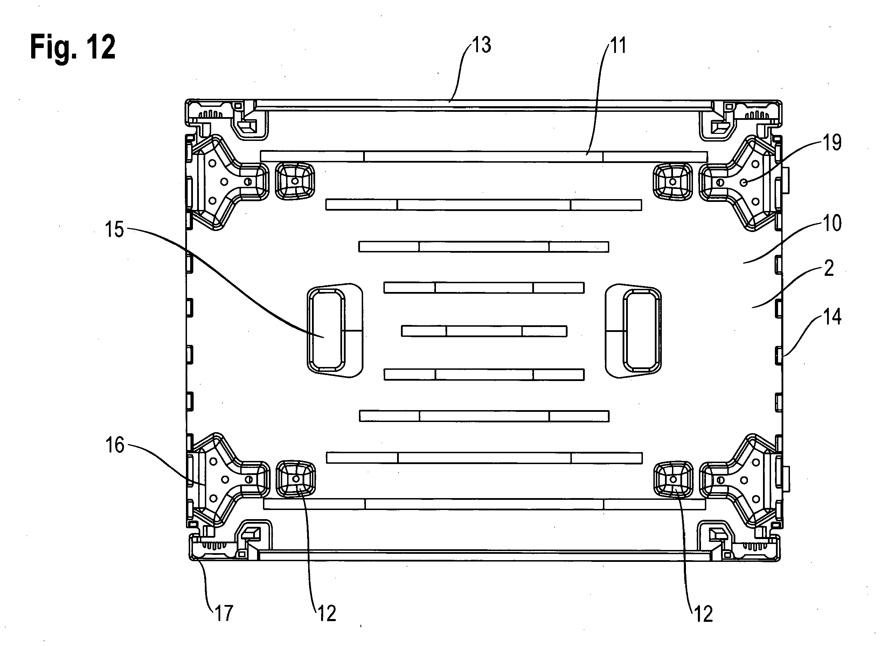

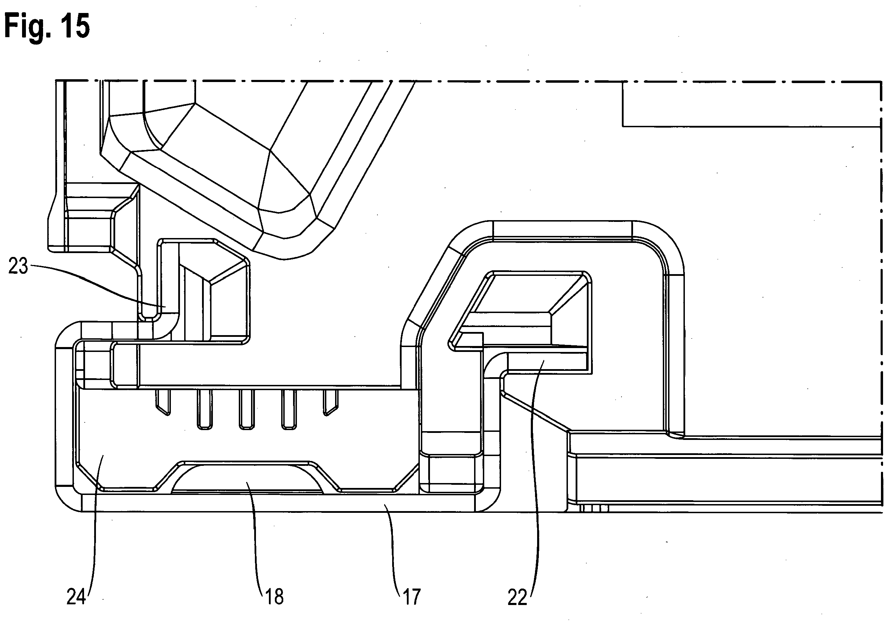

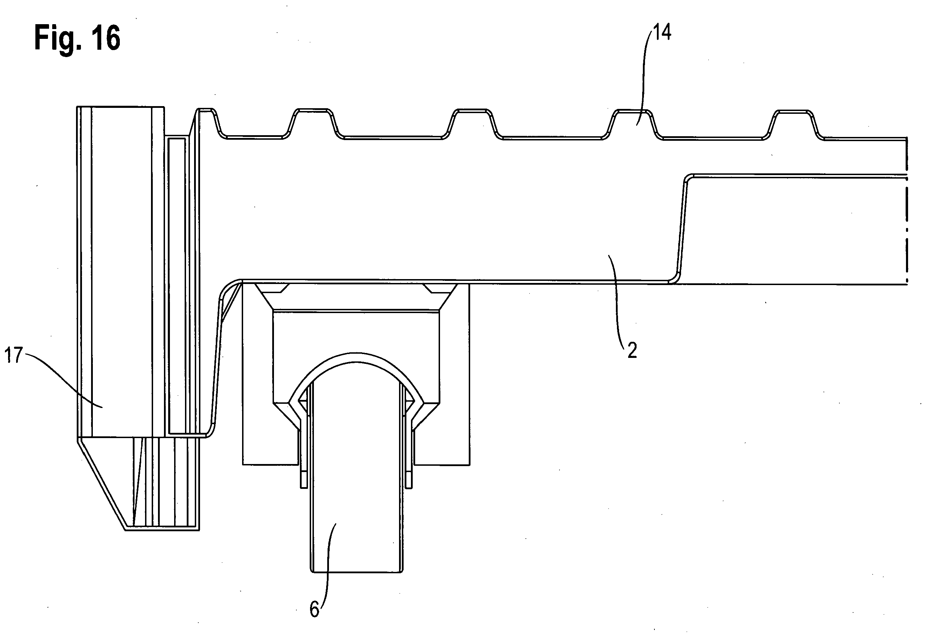

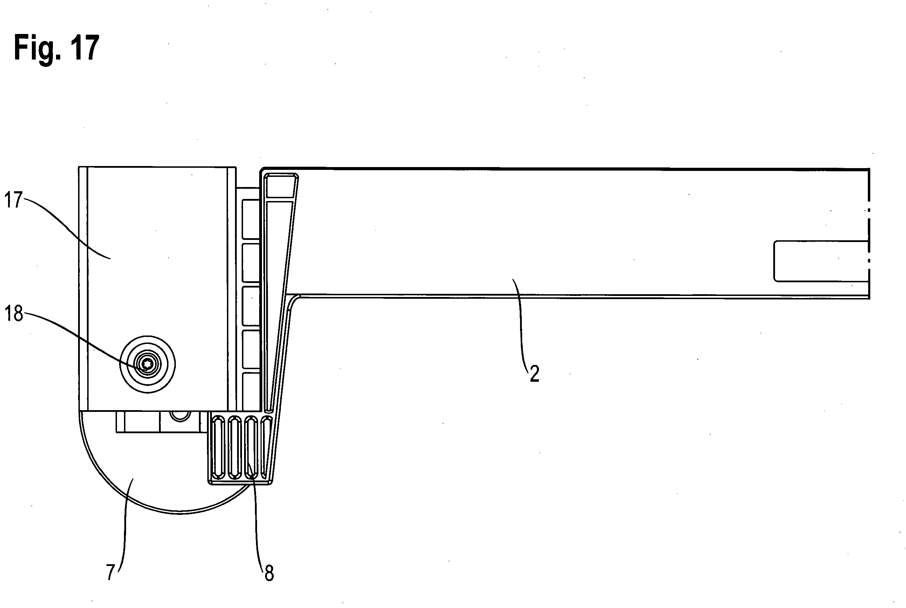

Die Details und die Funktionalität eines erfindungsgemäßen Basiselementes 2 wird anhand der Figuren 9 bis 17 beschrieben.

Das Basiselement 2 ist ein Spritzgussteil mit einer im Wesentlichen ebenen Oberfläche 10. Auf dieser können Strukturelemente 11 ausgebildet sein. Dies kann beispielsweise eine Rücksicherung darstellen, es kann aber auch reinen Informationszwecken dienen oder reinen Designzwecken. In die Oberfläche sind eine Reihe von Senken und Löchern eingebracht. Mit 12 sind Stapelsenken bezeichnet, in welche Stapelnocken gleichartiger Elemente einsetzbar sind. Ein entlang der Vorder- und Rückkante an der Oberfläche verlaufender Rand 13 ist an den beiden Seitenkanten derart unterbrochen, dass sich einzelne Nocken 14 ergeben. Deren Funktion wird später erläutert. Eingrifflöcher 15 dienen dem Zweck, das Basiselement 2 auf einfache Weise ergreifen und anheben zu können. Die Eingrifflöcher 15 sind beispielsweise an der Unterseite durch Eingriffausnahmen 21 abgeflacht, so dass auf diese Weise ein leichtes Handling ermöglicht ist. Entsprechende Abflachungen können auch an der oberen entsprechenden Kante ausgebildet sein.

Es sind Senken 16 vorgesehen, in welche das Rad eines darüber gestapelten gleichartigen Basiselementes 2 einsetzbar. Auf diese Weise wird sichergestellt, dass übereinander gestapelte Basiselemente mit den Ständern 8 aufeinander stehen.

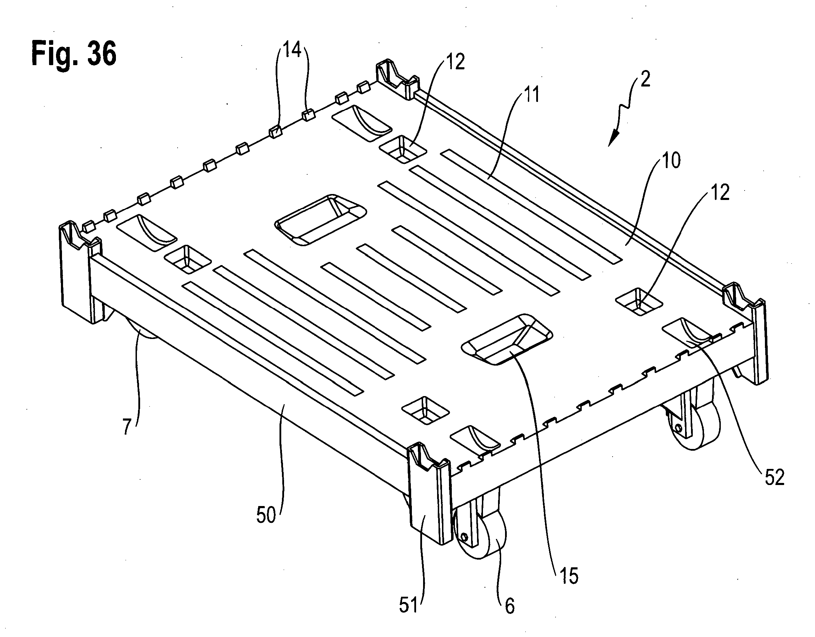

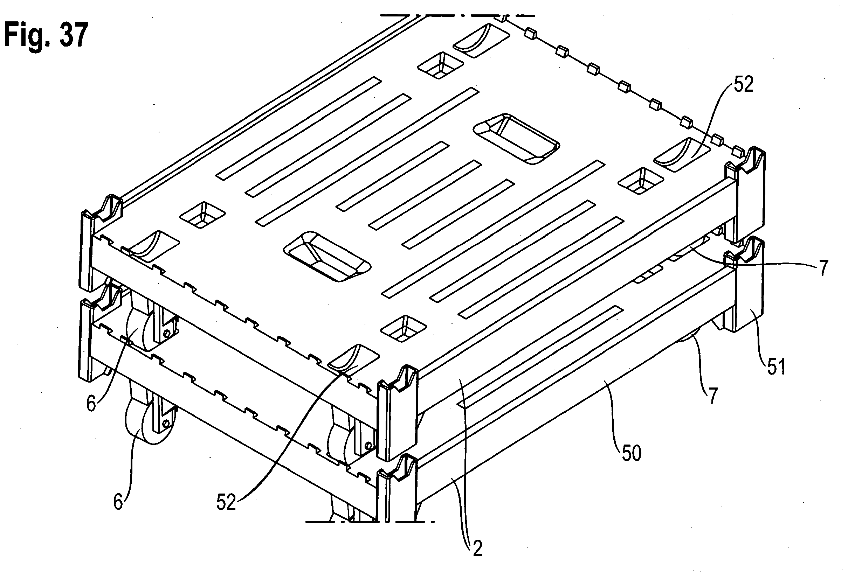

Wie später im Zusammenhang mit Figuren 36 und 37 beschrieben, sind Senken so ausgebildet, dass die Räder eines darüber angeordneten Basiselementes darin zum Stehen kommen, zugleich aber auch tragend sind, so dass eine Stapelung nicht über Ständer erfolgt.

In den verschiedenen Senken können Dränagelöcher 19 ausgebildet sein, um ein Abfließen von etwaig auftreffendem Wasser zu ermöglichen. Im Eckbereich ist eine metallene Profilkappe 17 in entsprechende Einschubnuten 22, 23 eingeschoben und mittels einer Schraube 18 befestigt. Die Schraube ist gesenkt. Ein Mittelsteg 24 ist so positioniert, dass sowohl von oben als auch von unten ein Pfostenelement in den entsprechenden Raum zwischen Basis 2 und metallener Abdeckkappe 17 einsetzbar ist und an das Zwischenelement 24 stößt.

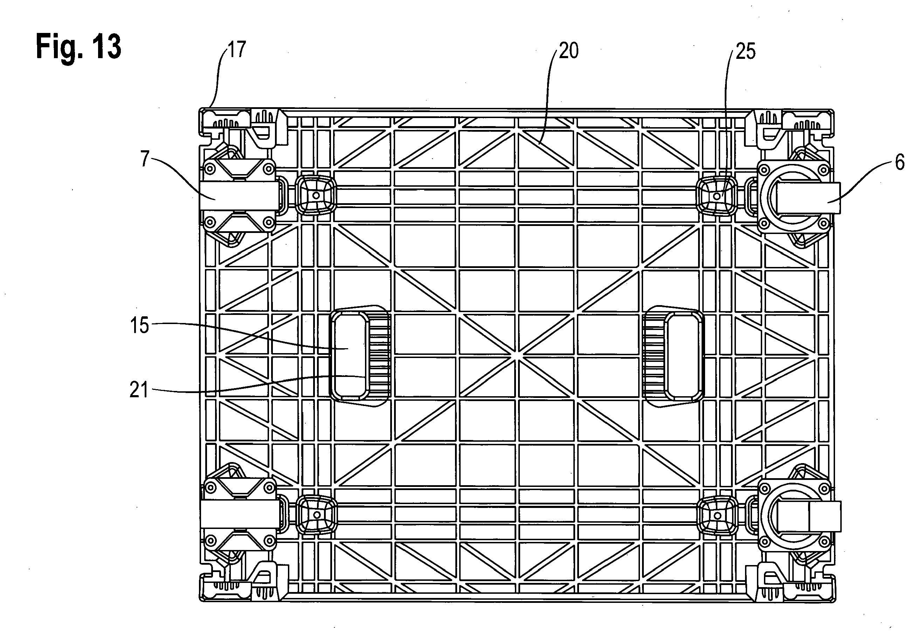

Im unteren Bereich ist eine mechanisch optimierte Stabilisationsstruktur 20 in Form von Stegen ausgebildet. Die im Bezug auf die Oberfläche 10 beschriebenen Stapelsenken 12 sind an der Unterseite gemäß Fig. 13 als Stapelnocken 25 ausgeformt.

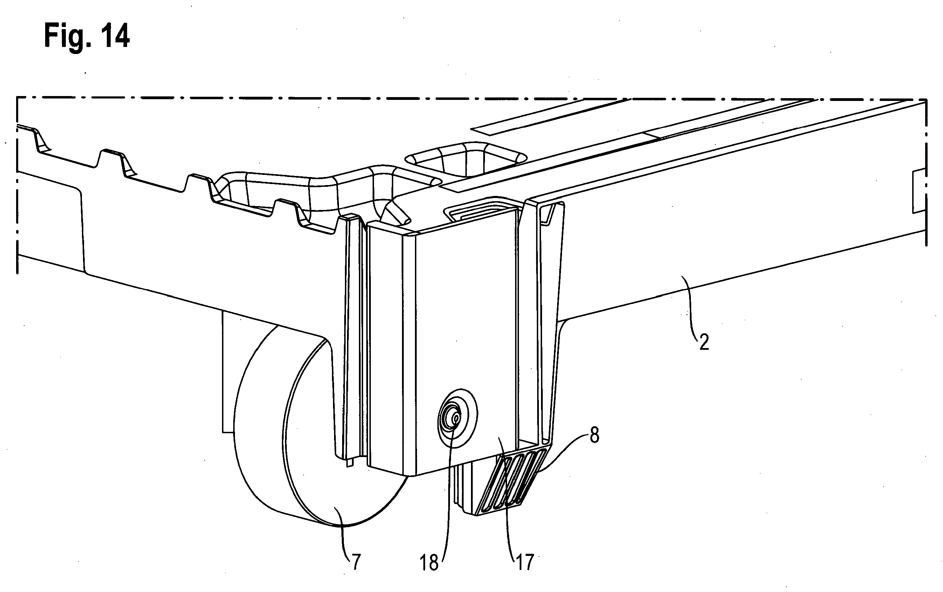

Wie insbesondere die Figuren 14 bis 17 zeigen, ist der Eckbereich durch das eingeschobene metallische Profilelement 17, das hier mit Schraube 18 befestigt ist, hinsichtlich der Dimensionen festgelegt. Nach unten steht der Ständer 8 hervor. Dieser wirkt als Hilfsstütze im Falle, dass eines der Räder 6 oder 7 defekt ist und ausbricht. Darüber hinaus dient er als Stapelstütze beim Übereinanderstapeln von Basiselementen, wozu wiederum eine Stapelsenke in der Oberfläche ausgebildet ist (Fig. 9).

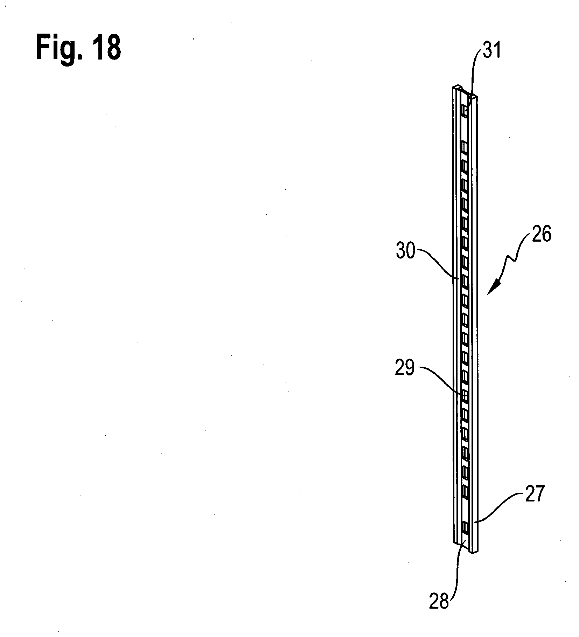

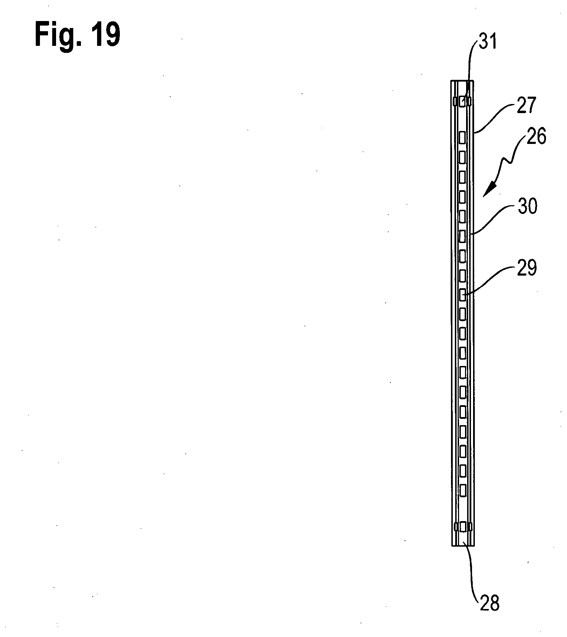

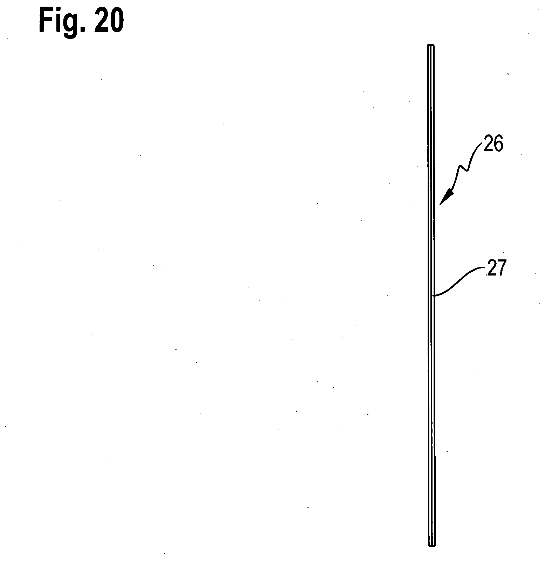

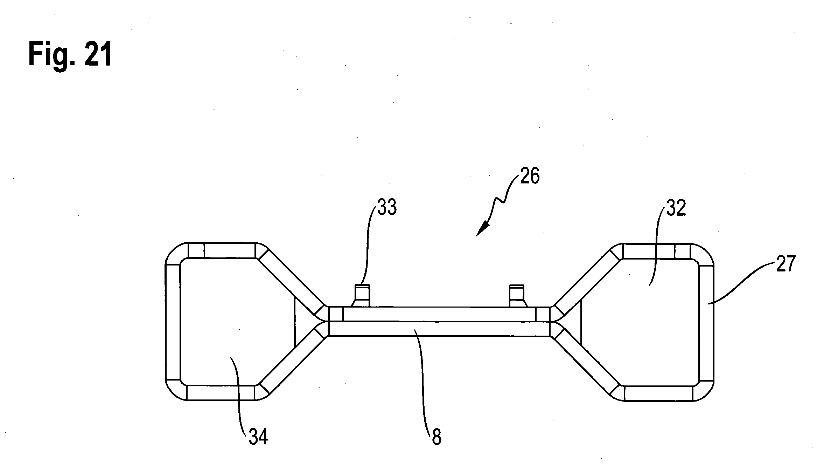

In den Figuren 18 bis 21 ist im Detail ein erfindungsgemäßes Pfostenelement gezeigt. Das Pfostenelement 26 besteht aus einem Profilelement, welches beispielsweise durch Falzformen aus einem Blechstreifen gebildet ist. Es umfasst Holme 27 und dazwischen einen Steg 28. In den Stegbereich 28 sind Löcher 29 eingebracht. In einer bestimmten Anzahl von Löchern sind Marker 30 angeordnet. Am oberen und unteren Ende des Pfostenelements 26 ist ein andersartiges Loch 31 ausgebildet, welches durch Stanzen gebildet ist. Durch das Stanzen und Aufbiegen des Materials ergeben sich hervorstehende Nocken 33. Die Holme 27 sind als fünfeckige Holme ausgebildet und haben einen inneren Hohlraum 32, der im gezeigten Ausführungsbeispiel durch Pfropfen 34 verschlossen ist. Auf diese Weise tritt kein Wasser ein.

An der Funktionalität der einzelnen Elemente des Holmes wird anhand weiterer Figuren weiter unten beschrieben.

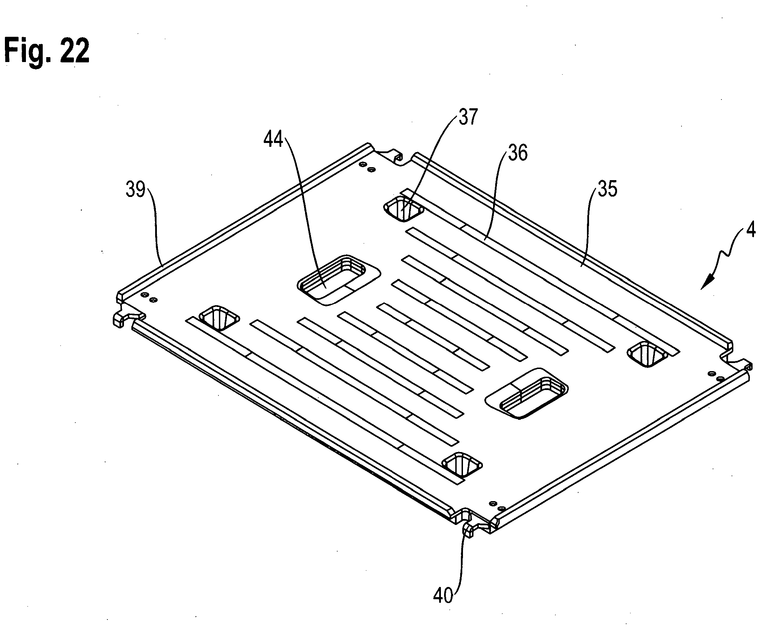

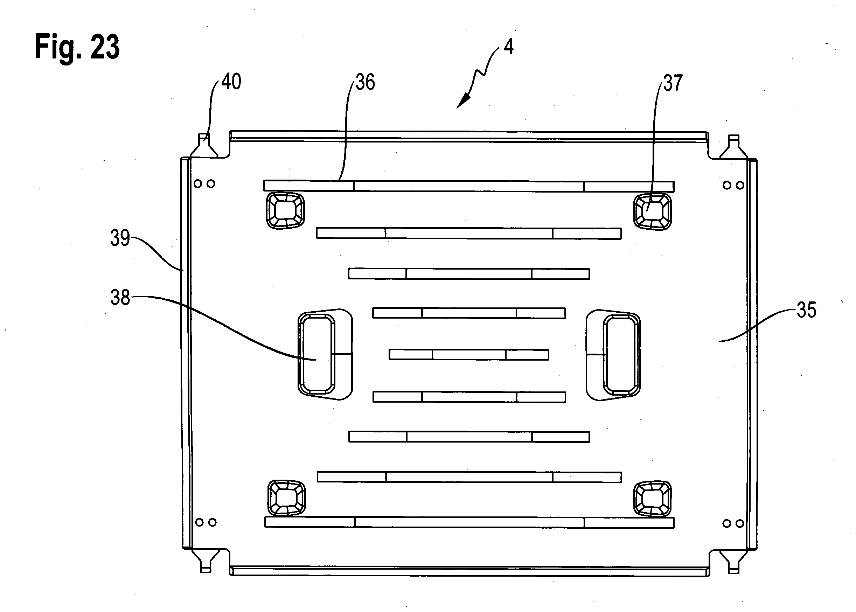

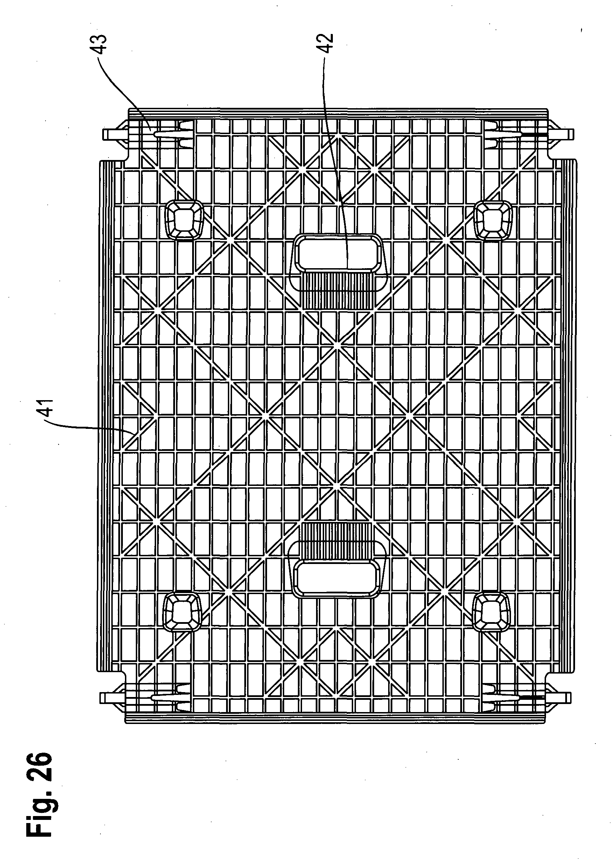

In den Figuren 22 bis 26 ist ein Ausführungsbeispiel für ein erfindungsgemäßes Regalbodenelement gezeigt.

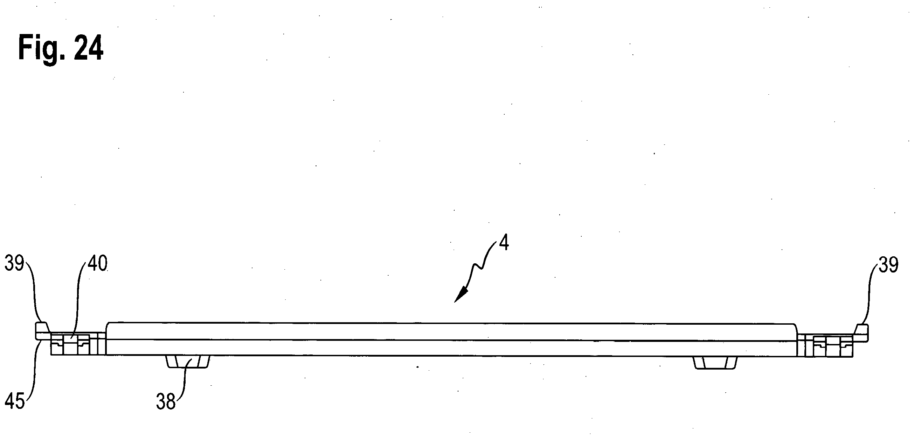

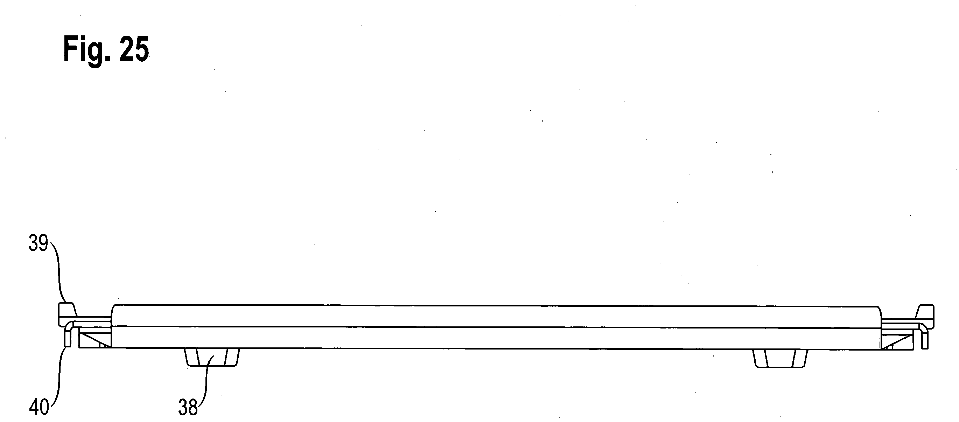

Das Regelbodenelement 4 hat eine obere Oberfläche 35. Auf dieser können Strukturelemente 36 ausgebildet sein, die eine technisch-sachliche Funktion haben können, beispielsweise gegen rutschen sichern, aber auch informativen oder Designcharakter haben können. Stapelsenken 37 sind ausgebildet und nach unten hin formen diese Stapelnocken 38, die beim Übereinanderstapeln entsprechender Regalbodenelemente in die Senken eingreifen. Ein Rand 39 ist ausgebildet. Wie Figuren 24 und 25 zeigen ist dieser Rand 39 so ausgebildet, dass an der Unterkante eine Ausnehmung 45 verbleibt. Stapelt man entsprechende Regalbodenelemente übereinander, kommt der Rand 39 in der Ausnehmung 45 zum liegen. Daraus ergibt sich eine definierte Stapelhöhe und auch eine Verrutschsicherung.

Hakenelemente 40 zum Befestigen des Regalbodenelementes 4 an einem Pfostenelement sind in den Eckbereichen in Ausnehmungen ausgebildet. Diese sind metallisch und in Einschubbereiche 43, beim Spritzgießen ausgebildete Schlitze, eingeschlagen. Sie sind mit Widerhakenelementen versehen, um ein unbeabsichtigtes Lösen zu vermeiden.

Grifföffnungen 44, die mit abgesenkten oder abgeflachten Eingriffbereichen 42 versehen sein können, und zwar an der der Ober- und/oder Unterkante, sind ebenfalls ausgebildet, um ein leichtes Ergreifen eines Regalbodenelementes zu ermöglichen.

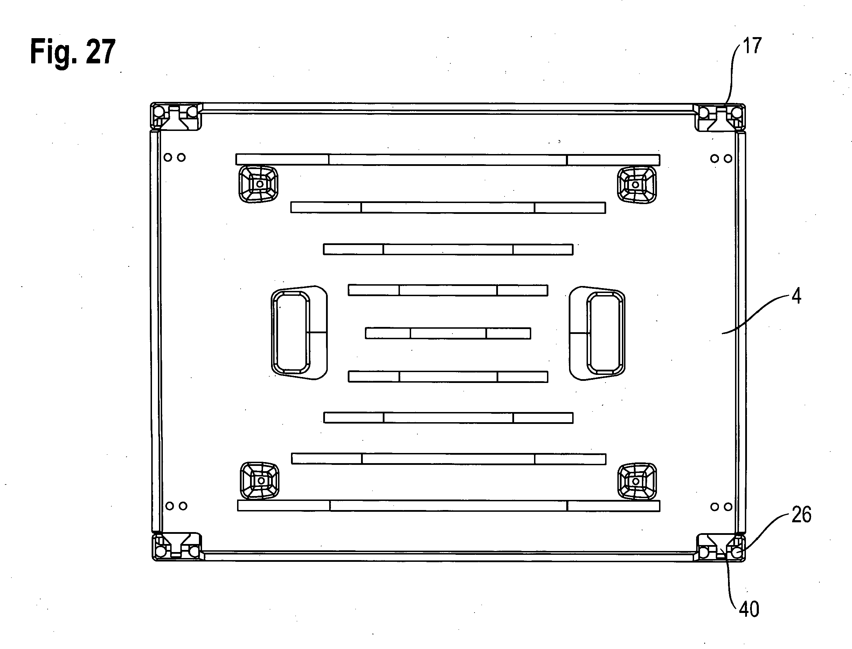

In den Figuren 27 bis 29 ist die Montage eines Regalbodenelementes zur Ausbildung eines erfindungsgemäßen Trägers beziehungsweise Ständers 1 gezeigt. Zu erkennen ist in Fig. 27 die Oberfläche eines Regalbodenelementes 4 und seines Einhängehakens 40, welcher in einen Pfosten 26 an jeder Ecke eingehängt ist. Der Pfosten seinerseits steht in dem Aufnahmebereich, gebildet durch das Metallprofil 17 im nicht weiter erkennbaren Basiselement. Es ist zu sehen, dass kein Teil irgendeines der Elemente über die Grundfläche des Basiselementes hinaussteht, also nicht aus einem virtuellen Quader herausragt, dessen eine Seitenwandung die Basiselementfläche ist.

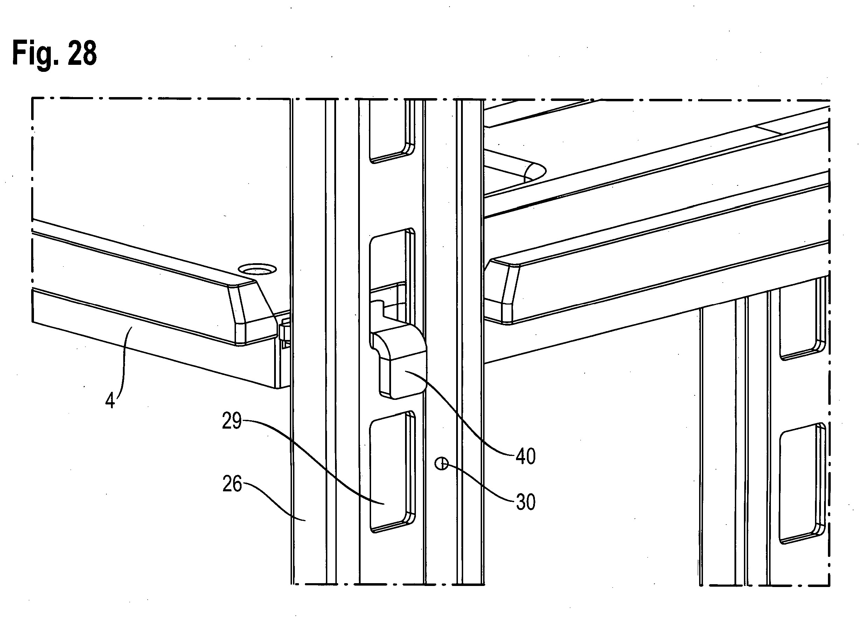

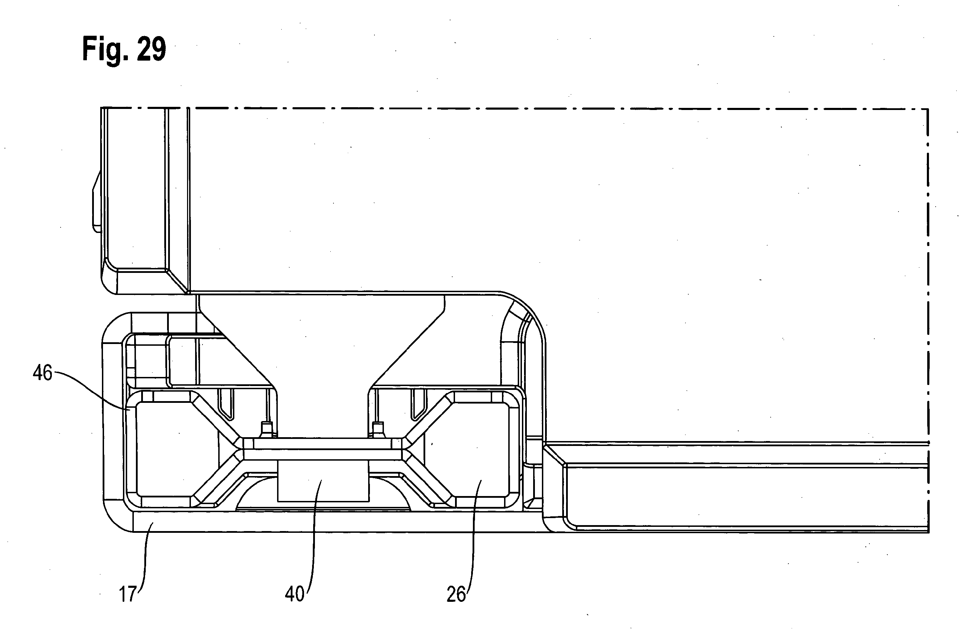

Fig. 28 zeigt im Detail die Einhängesituation, bei welcher der Haken 40 in die entsprechende Öffnung 29 des Pfostenelementes 26 hineinragt. Durch die spezielle Ausbildung des Pfostenelementes 26 mit Holmen und Steg ragt der Haken 40 nicht aus der Kontur heraus
Die Detailansicht in Fig. 29 zeigt darüber hinaus einen Anschlag 46, durch den verhindert wird, dass der Haken 40 sich zu weit in Richtung des Pfostenelementes 26 bewegt. Dies wird durch einen Kunststoffanschlag unterhalb des Hakens am Regelbodenelement realisiert.

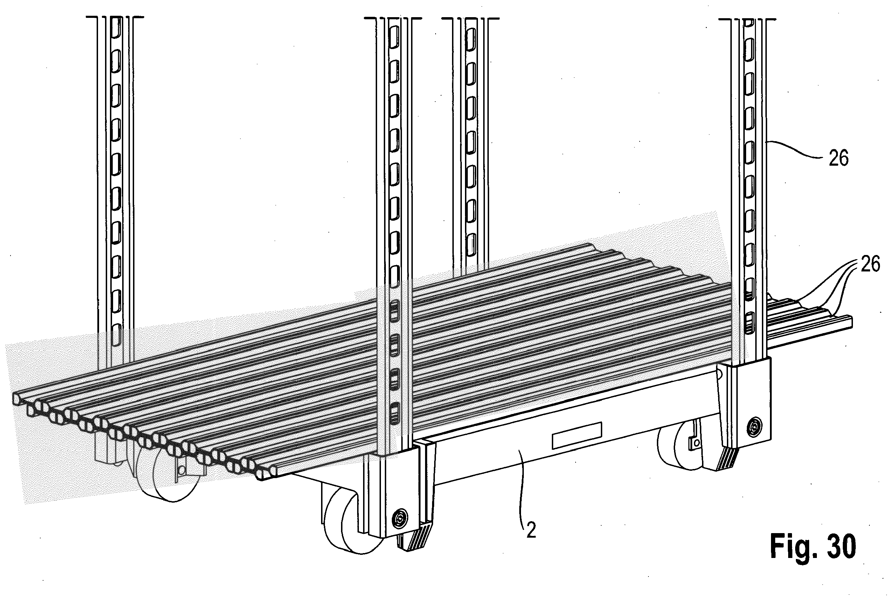

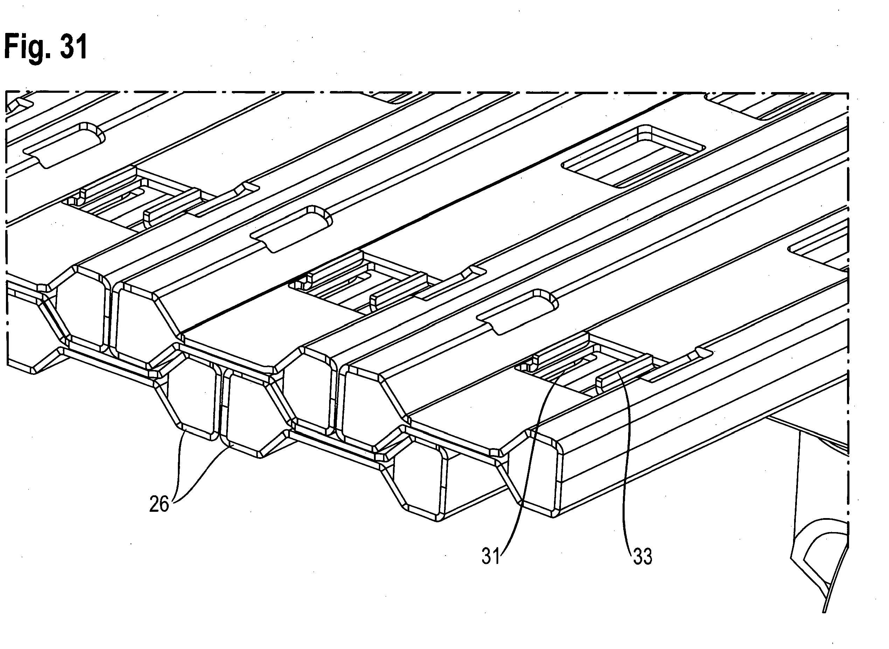

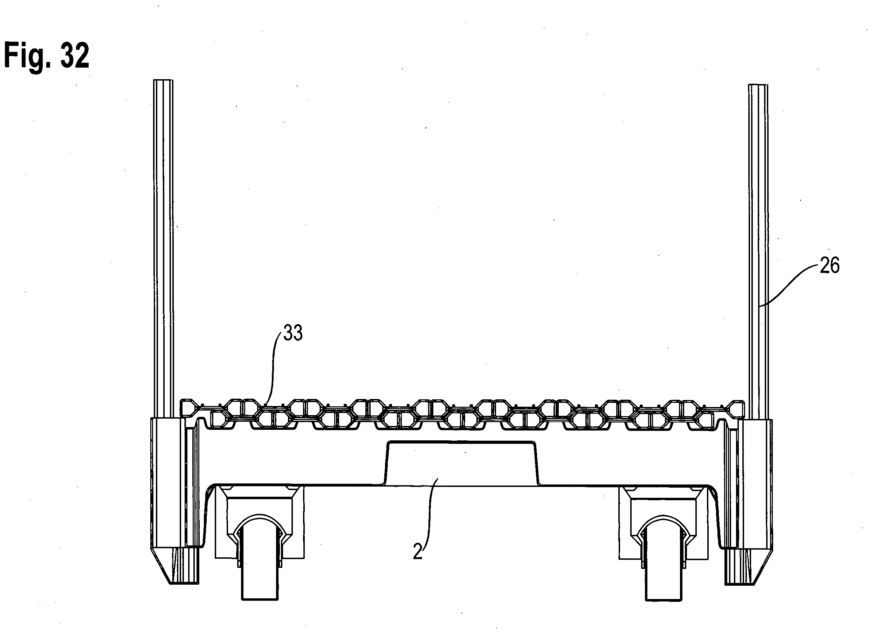

Die Figuren 30 bis 32 zeigen im Detail Möglichkeiten zur Nutzung der Pfostenelemente 26. Werden diese nicht mehr benötigt, müssen diese rückgeführt werden. Diese können auf einem Basiselement 2 aufgelegt werden. Da das Basiselement im Seitenkantenbereich Nocken 14 aufweist, können Pfostenelemente 26 darauf praktisch gegen Längsverschiebung gesichert aufgelegt werden. Dazu greifen die Nocken in die Öffnungen 29 eines Pfostenelementes 26 ein. Darüber hinaus können Pfostenelemente gestapelt werden, da die Aufbiegungen 33 im Bereich der Endlöcher 31 in die Endlöcher aufgelegter Elemente eingreifen. Auf diese Weise werden auch Pfostenelemente 26 in höheren Lagen Längsverschiebung gesichert. Die Sicherung gegen Querverschiebung erfolgt durch Einsetzen von Pfostenelementen 26 in ein Basiselement 2, wie dies in Fig. 30 und Fig. 32 zeigt ist.

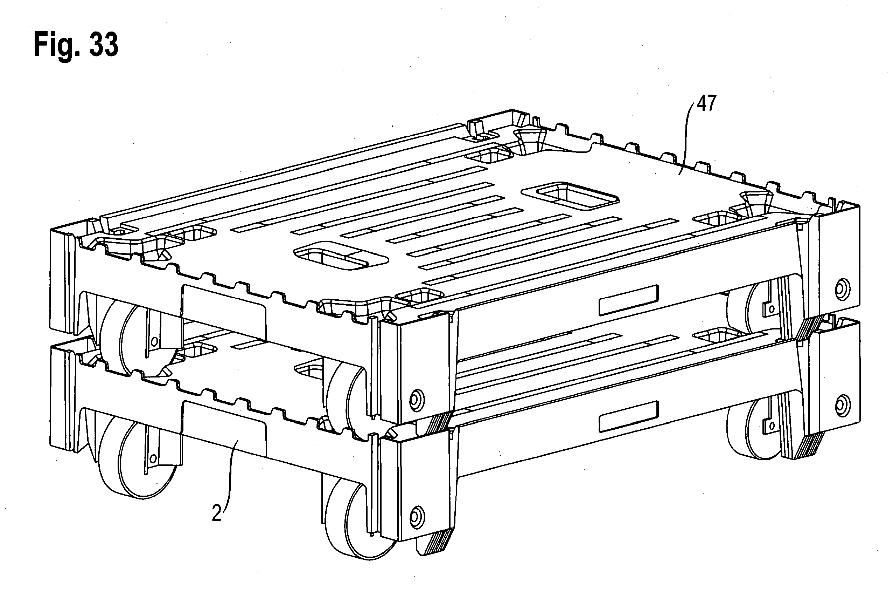

Fig. 33 zeigt einen Stapel von Basiselementen. Auf das erste Basiselement 2 ist ein zweites Basiselement, bezeichnet mit 47, aufgesetzt. Dieser Stapel lässt sich beliebig erweitern. Wie sich zeigt, kommen die Räder des oberen Basiselementes in den entsprechenden Senken des unteren Basiselementes zum liegen. Gestützt werden die Basiselemente durch die Eckpfosten 8. Ein solcher Stapel ist gegen Verschieben einzelner Elemente gesichert.

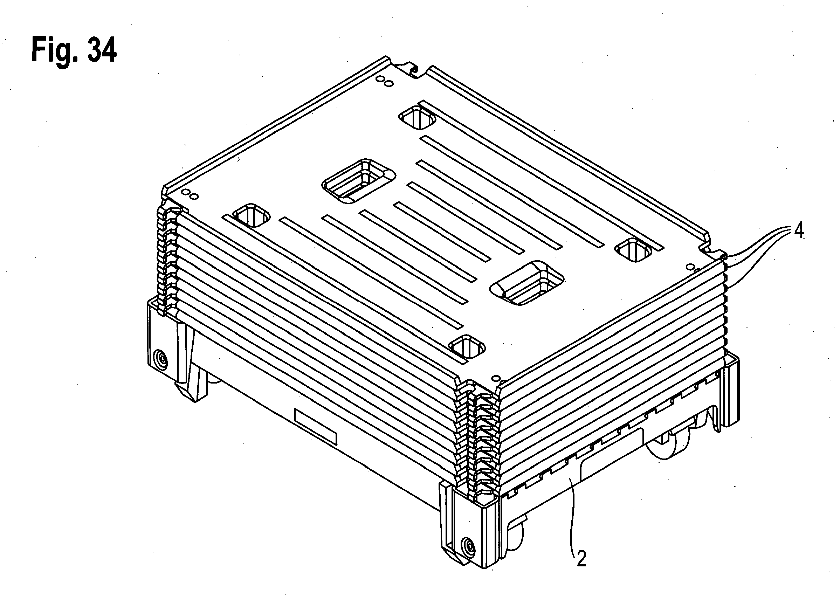

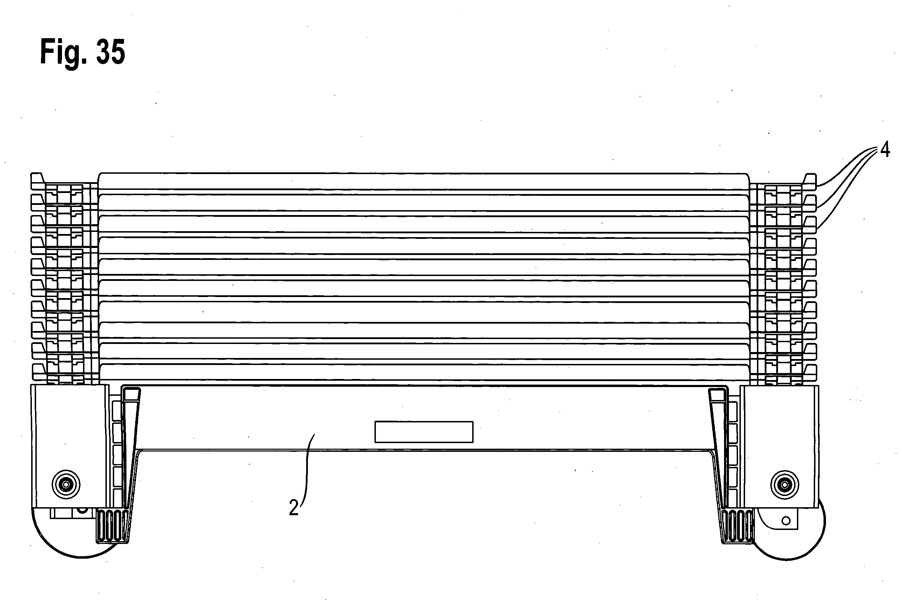

Die Figuren 34 und 35 zeigen einen Lager- und/oder Rückführungsstapel von Regalbodenelementen 4. Die Regalbodenelemente 4 sind auf ein Basiselement 2 aufgesetzt, wobei die Stapelnocken in den entsprechenden Stapelsenken zum liegen kommen Auf diese Weise ergibt sich ein sehr sicherer Stapel. Wie Fig. 35 zeigt, kommen die Randbereiche von unten liegenden Regalbodenelementen in den ausgenommenen Kanten des darüber liegenden Elementes zum liegen. Es ergibt sich eine definierte Stapelhöhe.

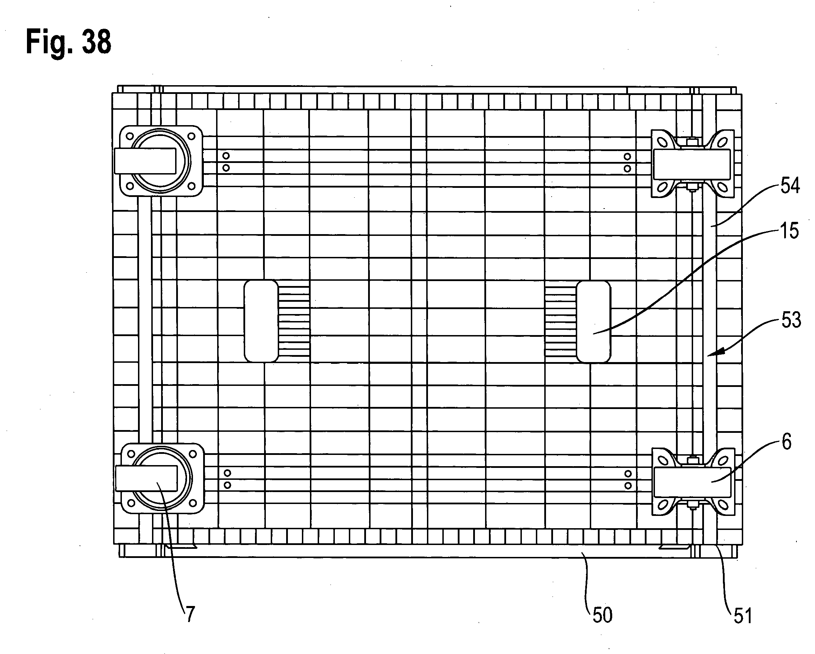

In den Fign. 36 bis 38 ist eine alternative Ausführungsform gezeigt. Hierbei ist das Rahmenelement zunächst wie oben beschrieben als Spritzgussteil aus Kunststoff gebildet. Es weist auf einer Oberfläche 10 Strukturelemente 11 auf, eine entsprechende mechanische Stabilitätsstruktur auf der Unterseite, Nocken 14, Stapelsenken 12 sowie Räder 6 und 7. Im Unterschied zu den oben beschriebenen Ausführungsformen ist ein Stahlrahmen 53 angeordnet, welcher seitliche Rahmenteile 50 sowie Eckelemente 51 aufweist. Wie insbesondere Fig. 38 zeigt, ist an der Unterseite verlaufend jeweils ein Verbindungsrahmenelement 54 ausgebildet. Diese Konstruktion ermöglicht eine vereinfachte Herstellung und bringt eine größere Stabilität und Robustheit. Die Eckelemente 51 sind so ausgebildet, dass Pfostenelemente aufgenommen werden können. Die Verwendung einer Schraube erübrigt sich hier unter Umständen, da der Rahmen 53 selbst ausreichend Haltestabilität aufbringt.

Darüber hinaus sind die Eckelemente 51 nicht mehr als Ständer weitergebildet. Beim Stapeln, wie dies Fig. 37 zeigt, stehen die Basiselemente 2 jeweils mit den Rädern 6 und 7 auf dem jeweils darunter liegenden Basiselement 2. Die Verwendung von Ständern erübrigt sich aufgrund der Eigenstabilität der Basiselemente, die durch die Rahmen 53 herbeigeführt wird.

### Bezugszeichenliste

- 1: Transport- und Präsentationsständer
- 2: Basiselement
- 3: Pfostenelement
- 4: Regalbodenelement
- 5: Tafel
- 6: Rad
- 7: Rad
- 8: Standelement
- 9: Metalleckelement
- 10: Oberfläche
- 11: Strukturelemente
- 12: Stapelsenken
- 13: Rand
- 14: Nocken
- 15: Griffloch
- 16: Aufnahmesenke für Rad
- 17: metallische Eckkappe
- 18: Schraube
- 19: Dränageloch
- 20: mechanische Tragstruktur
- 21: Eingreifausnehmung
- 22: Einschubnut
- 23: Einschubnut
- 24: Zwischenelement
- 25: Stapelnocken
- 26: Pfostenelement
- 27: Holm
- 28: Steg
- 29: Loch
- 30: Marker
- 31: Loch
- 32: Hohlraum
- 33: Nocken
- 34: Pfropfen
- 35: Oberfläche
- 36: Strukturelemente
- 37: Stapelsenke
- 38: Eingrifföffnung
- 39: Rand
- 40: Hakenelement
- 41: mechanische Tragstruktur
- 42: Eingriffbereich
- 43: Einschubbereich
- 44: Eingrifföffnung
- 45: Ausnehmung
- 46: Anschlag
- 47: Basiselement
- 50: Rahmenteil
- 51: Eckelement
- 52: Senke für Rad
- 53: Rahmen
- 54: Verbindungsrahmenelement

## Patentansprüche

1. Fahrbarer Warentransport- und Präsentationsständer (1) umfassend ein Basiselement (2), vier Pfostenelemente (3) und Regalbodenelemente (4), wobei alle Elemente lösbar zusammensteckbar sind und das Basiselement in Länge und Breite die Grundfläche eines Quaders definiert, wobei in bestimmungsgemäß zusammengesetztem Zustand kein Teil eines Pfosten- oder Regalbodenelementes aus dem durch den Quader definierten Raum herausragt, **dadurch gekennzeichnet, dass** das Basiselement an einer Querseite ein paar Räder (7) mit starrer Ausrichtung und an der gegenüberliegenden Kante ein paar Räder (6) mit drehbarer Ausrichtung aufweist, wobei die Räder (6) des Paares mit drehbarer Ausrichtung einen kleineren Durchmesser haben als die Räder (7) mit starrer Ausrichtung.

2. Ständer gemäß Anspruch 1, **dadurch gekennzeichnet, dass** das Basiselement (2) eine Länge von 80 cm und eine Breite von 60 cm aufweist.

3. Ständer nach einem der vorhergehenden Ansprüche, **dadurch gekennzeichnet, dass** das Basiselement an einer Oberfläche Noppen aufweist und an der dieser abgewandten Oberfläche Senken.

4. Ständer nach einem der vorhergehenden Ansprüche, **dadurch gekennzeichnet, dass** das Basiselement aus Spritzguss gefertigt ist.

5. Ständer nach Anspruch 4, **dadurch gekennzeichnet, dass** das Basiselement (2) Eckelemente (9) aus Metall aufweist.

6. Ständer nach einem der vorhergehenden Ansprüche, **dadurch gekennzeichnet, dass** das Regalbodenelement (4) Ausnehmungen in den Eckbereichen zur Aufnahme von Pfostenelementen (3) aufweist.

7. Ständer nach Anspruch 6, **dadurch gekennzeichnet, dass** das Regelbodenelement (4) im Bereich der Ausnehmungen Hakenelemente (40) aufweist, die in Löcher (31) eines Pfostenelementes (3) einsetzbar sind.

8. Ständer nach einem der vorhergehenden Ansprüche, **dadurch gekennzeichnet, dass** das Regelbodenelement (4) Grifföffnungen (15) aufweist.

9. Ständer nach einem der vorhergehenden Ansprüche, **dadurch gekennzeichnet, dass** das Pfostenelement (3) Öffnungen aufweist.

10. Ständer nach Anspruch 9, **dadurch gekennzeichnet, dass** das Pfostenelement (3) im Bereich der Öffnungen gegenüber einer Einsteckkante zurückversetzt ist.

11. Ständer nach einem der vorhergehenden Ansprüche, **dadurch gekennzeichnet, dass** das Pfostenelement (3) ein gestanztes Loch und eine Materialauffaltung aufweist.

## Claims

1. A mobile goods transport and presentation stand (1) comprising a base element (2), four post elements (3) and shelf elements (4), wherein all elements can be plugged together in a detachable manner and the base element defines in length and width the base area of a cuboid, wherein in the intended assembled state no part of a post or shelf element protrudes from the space defined by the cuboid, **characterized in that** the base element has a pair of wheels (7) with rigid orientation on one transverse side and a pair of wheels (6) with rotatable orientation on the opposite edge, the wheels (6) of the pair with rotatable orientation having a smaller diameter than the wheels (7) with rigid orientation.

2. Stand according to claim 1, **characterized in that** the base element (2) has a length of 80 cm and a width of 60 cm.

3. Stand according to one of the preceding claims, **characterized in that** the base element has burls on one surface and depressions on the surface facing away from this surface.

4. Stand according to one of the preceding claims, **characterized in that** the base element is made by injection molding.

5. Stand according to claim 4, **characterized in that** the base element (2) has corner elements (9) made of metal.

6. Stand according to one of the preceding claims, **characterized in that** the shelf element (4) has recesses in the corner regions for receiving post elements (3).

7. Stand according to claim 6, **characterized in that** the shelf element (4) has hook elements (40) in the area of the recesses, which can be inserted into holes (31) of a post element (3).

8. Stand according to one of the preceding claims, **characterized in that** the shelf element (4) has grip openings (15).

9. Stand according to one of the preceding claims, **characterized in that** the post element (3) has openings.

10. Stand according to claim 9, **characterized in that** the post element (3) is set back in the region of the openings with respect to an insertion edge.

11. Stand according to one of the preceding claims, **characterized in that** the post element (3) has a punched hole and a material folding.

## Revendications

1. Support mobile de transport et de présentation de marchandises (1) comprenant un élément de base (2), quatre éléments de montant (3) et des éléments d'étagère (4), tous les éléments pouvant être assemblés de manière amovible et l'élément de base définissant la surface de base d'un parallélépipède rectangle en longueur et en largeur, aucune partie d'un élément de montant ou d'étagère ne dépassant de l'espace défini par le parallélépipède rectangle dans l'état assemblé conformément à l'usage prévu, **caractérisé en ce que** l'élément de base comprend une paire de roues (7) d'orientation rigide sur un côté transversal et une paire de roues (6) d'orientation rotative sur le bord opposé, les roues (6) de la paire d'orientation rotative ayant un diamètre inférieur à celui des roues (7) d'orientation rigide.

2. Support selon la revendication 1, **caractérisé en ce que** l'élément de base (2) a une longueur de 80 cm et une largeur de 60 cm.

3. Support selon l'une des revendications précédentes, **caractérisé en ce que** l'élément de base présente des picots sur une surface et des creux sur la surface opposée à celle-ci.

4. Support selon l'une des revendications précédentes, **caractérisé en ce que** l'élément de base est moulé par injection.

5. Support selon la revendication 4, **caractérisé en ce que** l'élément de base (2) comporte des éléments d'angle (9) en métal.

6. Support selon l'une des revendications précédentes, **caractérisé en ce que** l'élément d'étagère (4) présente des évidements dans les zones d'angle pour recevoir des éléments de montant (3).

7. Support selon la revendication 6, **caractérisé en ce que** l'élément d'étagère (4) présente, dans la zone des évidements, des éléments de crochet (40) qui peuvent être insérés dans des trous (31) d'un élément de montant (3).

8. Support selon l'une des revendications précédentes, **caractérisé en ce que** l'élément d'étagère (4) présente des ouvertures de poignée (15).

9. Support selon l'une des revendications précédentes, **caractérisé en ce que** l'élément de montant (3) présente des ouvertures.

10. Support selon la revendication 9, **caractérisé en ce que** l'élément de montant (3) est en retrait par rapport à un bord d'insertion dans la zone des ouvertures.

11. Support selon l'une des revendications précédentes, **caractérisé en ce que** l'élément de montant (3) présente un trou estampé et un pliage de matériau.
